(19) Europäisches Patentamt
European Patent Office
Office européen des brevets

(11) Publication number: 0 203 577 A2

(12) EUROPEAN PATENT APPLICATION

(21) Application number: 86107202.3

(22) Date of filing: 27.05.86

(51) Int. Cl.⁴: C08J 3/08 , C08K 5/02 , C08L 27/12 , C08F 214/18 , C08J 5/18 , C08J 5/22 , B01D 13/04

(30) Priority: 31.05.85 US 740122
31.05.85 US 739933
31.05.85 US 739934
31.05.85 US 739956
31.05.85 US 739931
31.05.85 US 739955
31.05.85 US 739734
31.05.85 US 739936
31.05.85 US 739943

(43) Date of publication of application: 03.12.86 Bulletin 86/49

(84) Designated Contracting States: AT BE CH DE FR GB IT LI NL SE

(71) Applicant: THE DOW CHEMICAL COMPANY
2030 Dow Center Abbott Road P.O. Box 1967
Midland, MI 48640(US)

(72) Inventor: Birdwell, Jeffrey D.
207 Nasturtium
Lake Jackson Texas 77566(US)
Inventor: Carl, William P.
39 Erik Drive
Angleton Texas 77515(US)
Inventor: Moritz, Burt E., III
204 Elm
Lake Jackson Texas 77566(US)

(74) Representative: Weickmann, Heinrich, Dipl.-Ing. et al
Patentanwälte Dipl.-Ing. H.Weickmann Dipl.-Phys.Dr. K.Fincke Dipl.-Ing. F.A.Weickmann Dipl.-Chem. B. Huber Dr.-Ing. H. Liska Dipl.-Phys.Dr. J. Prechtel
Möhlstrasse 22
D-8000 München 80(DE)

# (54) Novel fluoropolymer solutions.

(57) The invention is a solution/dispersion composition comprising a perfluorinated polymer containing sites convertible to ion exchange groups dissolved in a solvent/dispersant having:

a boiling point of less than 110°C;

a density of from 1.55 to 2.97 grams per cubic centimeter, and

a solubility parameter of from greater than 7.1 up to 8.2 hildebrands. Particularly preferred is a solvent/dispersant having the general formula:

$XCF_2\text{-}CYZX'$

EP 0 203 577 A2

wherein:

X is selected from F, Cl, Br, and I;

X' is selected from Cl, Br, and I;

Y and Z are independently selected from H, F, Cl, Br, I and R';

R' is selected from perfluoroalkyl radicals and chloroperfluoroalkyl radicals having from 1 to 6 carbon atoms.

The most preferred solvent is 1,2-dibromotetrafluoroethane.

# NOVEL FLUOROPOLYMER SOLUTIONS

Ion exchange active fluoropolymer films or sheets have been widely used in industry, particularly as ion exchange membranes in chlor-alkali cells. Such membranes are made from fluorinated polymers having ion exchange active groups attached to pendant groups on the polymeric backbone.

Such polymers are usually thermoplastic and may be fabricated into films or sheets while in their molten form using mechanical extrusion equipment. However, such equipment is operated in the temperature region near the crystalline melting point of the polymer, which is commonly near the decomposition temperature of some of the polymers. Thus, decomposition may be a problem when some polymers are formed into films by conventional methods. Likewise, it is difficult to make such polymers into films thinner than about 10 microns using such techniques. In addition, it is difficult to make films of consistent thickness. It would therefore be highly desirable to be able to make films having a consistent thickness.

Forming membrane structures and support structures into multiple layers is the subject of several patents and applications including U.S. Patent Nos. 3,925,135; 3,909,378; 3,770,567; and 4,341,605. However, these methods use complicated procedures and equipment including such things as vacuum manifolds, rolls and release media.

Prior art methods for fabricating films from perfluorinated polymers have been limited by the solubility of the polymers and the temperature-dependent viscosity-shear rate behavior of the polymers. To overcome these characteristics of perfluorinated carboxylic ester polymers, workers have tried to swell the polymers using various types of swelling agents and to reduce the fabrication temperatures of the polymers to practical ranges by extraction. Extractions methods have been taught in, for example, U.S. Patent No. 4,360,601. There, low molecular weight oligomers were removed from carboxylic ester polymers. Polymer "fluff" was extracted in a Soxhlet device at atmospheric pressure for 24 hours (see Examples 1 and 3 of U.S. Patent No. 4,360,601). Such treatment has been found to make some fluorinated carboxylic ester copolymers more processible and operate more efficiently in a chlor-alkali cell when in a hydrolyzed form. Such extractions modify the fabricated polymer article, for example, by forming a grease of the polymer as shown in Example 3 of U.S. Patent No. 4,360,601.

In addition, such extractions seem to lower processing temperatures of carboxylic ester polymers after isolation. Isolation means separation from the polymerization latex by conventional methods of deactivating the surfactant such as freezing, heating, shearing, salting out or pH adjustment.

British Patent No. 1,286,859 teaches that highly polar organic "solvents" dissolve small amounts of a fluorinated vinyl ether/tetrafluoroethylene copolymer in its thermoplastic form. Thermoplastic form means the polymer is in a form which can be molded or processed above some transition temperature (such as the glass transition temperature or the melting point) without altering its chemical structure or composition. The patent teaches the use of "solvents" including butanol, ethanol, N,N-dimethylacetamide, and N,N-dimethylaniline.

Similar approaches have been used to swell membranes in their ionic forms. Ionic forms of membranes are membranes which have been converted from their thermoplastic form ($-SO_2F$ or $-COOCH_3$) to their ionic forms ($-SO_3M$ or $-COOM$ where M is $H^+$, $K^+$, $Na^+$, or $NH_4^+$ or other metal ion.

Prior art workers have used highly polar solvents or mixtures of solvents on substantially perfluorinated polymers and less polar solvents on fluorinated polymers containing hydrocarbon components as co-monomers, ter-monomers or crosslinking agents.

However, each of the prior art methods for swelling, dispersing or extracting the polymers has certain shortcomings which are known to those practicing the art. Polar solvents have the potential for water absorption or reactivity with the functional groups during subsequent fabrication operations, thus making poor coatings, films, etc. High boiling solvents are difficult to remove and frequently exhibit toxic or flammability properties. Functional forms (ionic forms) of the polymers can react with solvents. (See Analytical Chem., 1982, Volume 54, pages 1639-1641).

The more polar of the solvents such as methanol, butanol esters, and ketones as disclosed in U.S. Patent No. 3,740,369; British Patent No. 1,286,859; and Chemical Abstracts 7906856, have high vapor pressures at ambient conditions, which is desirable for solvent removal; however, they tend to absorb water. Their water content is undesirable because.it causes problems in producing continuous coatings and films of hydrophobic polymers. In addition, polar solvents frequently leave residues

which are incompatible with the polymers. Also, they frequently leave residues which are reactive during subsequent chemical or thermal operations if they are not subsequently removed.

Another approach taken by the prior art workers to form films from fluoropolymers include the use of high molecular weight "solvents" which have been produced by halogenating vinyl ether monomers. (See British Patent No. 2,066,824).

The swelling of the functional (ionic) forms of the fluoropolymers by polar or hydrophilic agents has been known for some time. In addition, the solvent solubility parameters were compared to the swelling effect of 1200 equivalent weight Nafion ion exchange membrane (available from E. I. DuPont Company) by Yeo at Brookhaven Laboratory (see Polymer, 1980, Volume 21, page 432).

The swelling was found to be proportional to two different ranges of the solubility parameter and a calculation was developed for optimizing ratios of solvent mixtures. Ionic forms of functional fluoropolymers may be treated in such a manner, however, the subsequent physical forming or manipulation of the polymers into usable configurations by any thermal operation is limited when the polymers are in the functional forms. In addition, non-ionic forms of polymers treated in this manner are also limited in the thermoplastic processing range by the stability of the functional group bonds.

Other solvation methods have used temperatures near the crystalline melting points of the polymers being solvated, thus requiring either high boiling point "solvents" or high pressure vessels to maintain the system in a solid/liquid state. See Analytical Chem., 1982, Volume 54, pages 1639-1641.

Burrell states the theory of Bagley [J. Paint Tech., Volume 41, page 495 (1969)] predicts a non-crystalline polymer will dissolve in a solvent of similar solubility parameter without chemical similarity, association, or any intermolecular force. However, he fails to mention anything about the solubility of polymers demonstrating crystallinity.

More particularly, the invention resides in a solution/dispersion composition comprising a perfluorinated polymer containing sites convertible to ion exchange groups dissolved in a solvent/dispersant having:

a boiling point less than 110°C; and

a solubility parameter of from greater than 7.1 to 8.2 hildebrands.

Particularly preferred is a solvent/dispersant having the general formula:

$XCF_2\text{-}CYZX'$

wherein:

X is selected from F, Cl, Br, and I;

X' is selected from Cl, Br, and I;

Y and Z are independently selected from H, F, Cl, Br, I and R';

R' is selected from perfluoroalkyl radicals and chloroperfluoroalkyl radicals having from 1 to 6 carbon atoms.

The most preferred solvent/dispersants are 1,2-dibromotetrafluoroethane (commonly known as Freon 114 B 2)

$BrCF_2\text{-}CF_2Br$

and 1,2,3-trichlorotrifluoroethane (commonly known as Freon 113):

$ClF_2C\text{-}CCl_2F$

of these two solution/dispersants, 1,2,-dibromotetrafluoroethane is the most preferred dispersant. It has a boiling point of about 47.3°C, a density of about 2.156 grams per cubic centimeter, and a solubility parameter of about 7.2 hildebrands.

The term dispersion, as used herein, means a composition containing a dispersant and a perfluorinated polymer containing sites convertible to ion exchange groups, wherein a portion of the polymer is dissolved in the dispersant, and a portion of the polymer is dispersed in the dispersant.

The present invention can be used to make ion exchange media, films and articles for use in electrolytic cells, fuel cells and gas or liquid permeation units.

Non-ionic forms of perfluorinated polymers described in the following U.S. patents are suitable for use in the present invention: 3,282,875; 3,909,378; 4,025,405; 4,065,366; 4,116,888; 4,123,336; 4,126,588; 4,151,052; 4,176,215; 4,178,218; 4,192,725; 4,209,635; 4,212,713; 4,251,333; 4,270,996; 4,329,435; 4,330,654; 4,337,137; 4,337,211; 4,340,680; 4,357,218; 4,358,412; 4,358,545; 4,417,969; 4,462,877; 4,470,889; and

4,478,695; and European Publication No. 0,027,009.

Such polymers usually have equivalent weights in the range of from 500 to 2000.

Particularly preferred are copolymers of monomer I with monomer II (as defined below). Optionally, a third type of monomer may be copolymerized with I and II.

The first type of monomer is represented by the general formula:

$CF_2=CZZ'$ (I)

where:

Z and Z' are independently selected from of -H, -Cl, -F, or $CF_3$.

The second monomer consists of one or more monomers selected from compounds represented by the general formula:

$Y-(CF_2)-(CFR_f)_b-(CFR_{f'})_c-O-[CF(CF_2X)-CF_2-O]_n-CF=CF_2$ (II) where:

Y is selected from $-SO_2Z$, -CN, -COZ, and $C(R^3_f)(R^4_f)OH$;

Z is selected from I, Br, Cl, F, OR, or $NR_1R_2$;

R is selected from a branched or linear alkyl radical having from 1 to 10 carbon atoms or an aryl radical;

$R^3_f$ and $R^4_f$ are independently selected from perfluoroalkyl radicals having from 1 to 10 carbon atoms;

$R_1$ and $R_2$ are independently selected from H, a branched or linear alkyl radical having from 1 to 10 carbon atoms or an aryl radical;

a is 0-6;

b is 0-6;

c is 0 or 1;

provided a+b+c is not equal to 0;

X is selected from Cl, Br, F, or mixtures thereof when n>1;

n is 0 to 6; and

$R_f$ and $R_{f'}$ are independently selected from F, Cl, perfluoroalkyl radicals having from 1 to 10 carbon atoms and fluorochlororadicals having from 1 to 10 carbon atoms.

Particularly preferred is when Y is $-SO_2F$ or $-COOCH_3$; n is 0 or 1; $R_f$ and $R_{f'}$ are F; X is Cl or F; and a+b+c is 2 or 3.

The third and optional monomer suitable is one or more monomers selected from the compounds represented by the general formula:

$Y'-(CF_2)_{a'}-(CFR_f)_{b'}-(CFR_{f'})_{c'}-O-[CF(CF_2X')-CF_2-O]_{n'}-CF=CF_2$ (III)

where:

Y' is selected from F, Cl or Br;

a' and b' are independently 0-3;

c is 0 or 1;

provided a'+b'+c' is not equal to 0;

n' is 0-6;

$R_f$ and $R_{f'}$ are independently selected from Br, Cl, F, perfluoroalkyl radicals having from 1 to 10 carbon atoms, and chloroperfluoroalkyl radicals having from 1 to 10 carbon atoms; and

X' is selected from F, Cl, Br, or mixtures thereof when n'>1.

Conversion of Y to ion exchange groups is well known in the art and consists of reaction with an alkaline solution.

It has been discovered that certain perhalogenated solvents/dispersants have a surprising effect of dissolving/dispersing the polymers defined above, especially when the polymers are in a finely divided state.

It is important that the solvent/dispersant has a boiling point of from 30°C to 110°C. The ease of removal of the solvent/dispersant and the degree of solvent/dispersant removal is important in the production of various films, coatings and the like, without residual solvent/dispersant; hence a reasonable boiling point at atmospheric pressure allows convenient handling at ambient temperature conditions yet effective solvent/dispersant removal by atmospheric drying or mild warming.

It is important that the solvent/dispersant has a density of from 1.55 to 2.97 grams per cubic centimeter. The polymers of the present invention have densities on the order of from 1.55 to 2.2 grams per cubic centimeter. Primarily, the polymers have

densities in the range of from 1.6 to 2.2 grams per cubic centimeter. The solvents/dispersants of the present] invention will therefore swell, dissolve and disperse small particles of this polymer, aided by the suspending effects of the similarity in densities.

The monomer $FSO_2CF_2CF_2OCF=CF_2$ has a density of about 1.65 grams per cubic centimeter and polytetrafluoroethylene has a density of about 2.2 grams per cubic centimeter. A copolymer of this monomer with tetrafluoroethylene would, thus, have a density between the two values.

It was discovered that in the prior art no recognition and thus no attempt was made to balance density. The prior art was interested in forming solutions and solutions do not separate.

Solubility parameters are related to the cohesive energy density of compounds. Calculating solubility parameters is discussed in U.S. Patent No. 4,348,310.

It is important that the solvent/dispersant has a solubility parameter of from greater than 7.1 and up to 8.2 hildebrands. The similarity in cohesive energy densities between the solvent and the polymer determine the likelihood of dissolving and swelling the polymer in the solvent/dispersant.

It is preferable that the solvent/dispersant has a vapor pressure of up to about 760 mm Hg at the specified temperature limits at the point of solvent/dispersant removal. The solvent/dispersant should be conveniently removed without the necessity of higher temperatures or reduced pressures involving extended heating such as would be necessary in cases similar to U.S. Patent No. 3,692,569 or the examples in British Patent No. 2,066,824 in which low pressures (300 millimeters) had to be employed as well as non-solvents to compensate for the higher boiling points and low vapor pressures of the complex solvents.

It has been found that solvents/dispersants represented by the following general formula are particularly preferred provided they also meet the characteristics discussed above(boiling point and solubility parameter):

$XCF_2$-CYZ-X'

wherein:

X is selected from F, Cl; Br, and I;

X' is selected from Cl, Br, and I;

Y and Z are independently seleeted from H, F, Cl, Br, I and R';

R' is selected from perfluoroalkyl radicals and chloroperfluoroalkyl radicals having from 1 to 6 carbon atoms.

The most preferred solvents/dispersants are 1,2-dibromotetrafluoroethane (commonly known as Freon 114 B 2):

$BrCF_2$-$CF_2Br$

and 1,2,3-trichlorotrifluoroethane (commonly known as Freon 113):

$ClF_2C$-$CCl_2F$

Of these two solvents/dispersants, 1,2-dibromotetrafluoroethane is the most preferred. It has a boiling point of about 47.3°C, a density of about 2.156 grams per cubic centimeter, and a solubility parameter of about 7.2 hildebrands.

1,2-dibromotetrafluoroethane is thought to work particularly well because, though not directly polar, it is highly polarizable. Thus, when 1,2-dibromotetrafluoroethane is associated with a polar molecule, its electron density shifts and causes it to behave as a polar molecule. Yet, when 1,2-dibromotetrafluoroethane is in contact with a non-polar molecule, it behaves as a non-polar solvent. Thus, 1,2-dibromotetrafluoroethane tends to dissolve the non-polar backbone of polytetrafluoroethylene and also the polar, ion - exchange-containing pendant groups. The solubility parameter of 1,2-dibromotetrafluoroethane is calculated to be from 7.13 to 7.28 hildebrands.

It is surprising that an off-the-shelf, readily-available compound such as 1,2-dibromotetrafluoroethane would act as a solvent/dispersant for the fluoropolymers described above. It is even more surprising that 1,2-dibromotetrafluoroethane happens to have a boiling point, a density, and a solubility parameter such that it is particularly suitable for use as a solvent/dispersant in the present invention.

In practicing the present invention, the polymer may be in any physical form. However, it is preferably in the form of fine particles to speed dissolution of the particles into the solvent/dispersant. Preferably, the particle size of the polymers is from 0.01 microns to 840 microns. More preferably, the particle size is less than 250 microns.

To dissolve or disperse the polymer particles into the solvent/dispersant, the polymer particles are placed in contact with the solvent/dispersant of choice and intimately mixed. The polymer and the solvent/dispersant may be mixed by any of several means including, but not limited to, shaking, stirring, milling or ultra sonic means. Thorough, intimate contact between the polymer and the solvent/disperant is needed for optimum dissolution.

The polymers of the present invention are dissolved into the solvent/dispersant at concentrations up to 0.5 weight percent of polymer to solvent/dispersant. At concentrations below 0.1 weight percent, there is insufficient polymer dissolved to be effective as a medium for coating of articles or forming films within a reasonable number of repetitive operations. Conversely, the amount of polymer that dissolves is about 0.5 weight percent polymer. Higher concentrations of polymers in solutions can be obtained by evaporating solvent from the above solutions until the solubility limits of the polymers are approached.

The polymers of the present invention can also be dissolved and dispersed into the solvent/dispersant at concentrations ranging from 0.1 to 50 weight percent of polymer to solvent/dispersant. At concentrations above about 50 weight percent there is sufficient polymer present as a separate phase such that viable, coherent films and coatings of uniform structure cannot be formed without particulate agglomerates, etc.

Preferably, the concentration of the polymer in the dispersant is from 1 to 20 weight percent. Most preferably, the concentration of the polymer in the dispersant is from 5 to 15 weight percent.

Dissolving or dispersing of the polymer into the solvent/dispersant can be conducted at room temperature conditions. However, the optimum solution effects are best achieved at temperatures from 10°C to 50°C. At temperatures above 50°C the measures for dissolving the polymer have to include pressure confinement for the preferred solvents or method of condensing the solvents. Conversely, at temperatures below 10°C many of the polymers of the present invention are below their glass transition temperatures thus causing their solutions to be difficult to form at reasonable conditions of mixing, stirring, or grinding.

Dissolving or dispersing of the polymers of the present invention into the solvent/dispersant are best conducted at atmospheric pressure. However, solution effects can be achieved at pressures from 760 to 15,000 mm Hg or greater. At pressures below 760 mm Hg, the operation of the apparatus presents no advantage in dissolving polymers, rather hindering permeation into the polymers and thus preventing forming of the solutions.

Conversely, pressures above 760 mm Hg aid in dissolving and dispersing polymers very little compared to the difficulty and complexity of the operation. Experiments have shown that at about 20 atmospheres the amount of polymer dissolved and dispersed in the solvent is not appreciably greater.

After the polymer compositions of the present invention have been formed, they may be fixed to other polymer films or substrates by sintering or compression to fix the polymer from the solution or dispersion to the substrate.

The following methods are suitable for fixing the solution or dispersion of the present invention to a substrate. Dipping the substrate into the solution or dispersion, followed by air drying and sintering at the desired temperature with sufficient repetition to build the desired thickness. Spraying the solution onto the substrate is used to advantage for covering large or irregular shapes. Pouring the solution or dispersion onto the substrate is sometimes used. Painting the solution or dispersion with brush or roller has been successfully employed. In addition, coatings may be easily applied with metering bars, knives or rods. Usually, the coatings or films are built up to the thickness desired by repetitive drying and sintering.

The type of substrate upon which the solution or dispersion of the present invention may be applied can include such things as glass, polytetrafluoroethylene tapes, or sheets, expanded mesh metal electrodes, scrim materials made of, for example, fibers selected from carbon., PTFE and metal, metal foil or sheets, or other polymer films or objects.

The substrate upon which the solution or dispersion is to be deposited is cleaned or treated in such a way as to assure uniform contact with the solution or dispersion. The substrate can be cleansed by washing with a degreaser or solvent followed by drying to remove any dust or oils from objects to be used as substrates. Metals should usually be acid etched, then washed with a solvent to promote adhesion, if desired, unless the metal is new in which case degreasing is sufficient.

After being cleaned, the substrates may be pre-conditioned by heating or vacuum drying prior to contact with the solution or dispersion in the coating operation. Temperatures and pressures in the following ranges are preferably used: about 20 mm Hg at about 110°C is sufficient in all cases; however, mild heat is usually adequate when applied at a temperature of about 50°C at atmospheric pressure.

After preparation, the substrates are coated with the solution or dispersion by any of several means including, but not limited to, dipping, spraying, brushing, pouring. Then the solution may be evened out using scraping knives, rods, or other suitable means. The solution or dispersion can be applied in a single step or in several steps depending on the concentration of the polymer in the solution and the desired thickness of the coating or film.

Following the application of the solution, or dispersion, the solvent/dispersion is removed by any of several methods including, but not limited to, evaporation or extraction. Extraction is the use of some agent which selectively dissolves or mixes with the solvent/dispersant but not the polymer.

These removal means should be employed until a uniform deposition of polymer is obtained and a continuous film is formed.

The solvent/dispersant removal is typically carried out by maintaining the coated substrate at temperatures ranging from 10°C to 110°C, with the preferred heating range being from 20°C to 100°C. The temperature selected depends upon the boiling point of the solvent/dispersant.

Heating temperatures are customarily in the range of from 20°C to 50°C for 1,2-dibromotetrafluoroethane.

The pressures employed for the removal of the solvent/dispersant from the coated substrate can range from 20 mm Hg to 760 mm Hg depending on the nature of the solvent/dispersion, although pressures are typically in the range of from 300 mm Hg to 760 mm Hg for 1,2-dibromotetrafluoroethane.

The forming of the coating or film can be carried out as part of the polymer deposition and solvent/dispersant removal process or as a separate step by adjusting the thermal and pressure conditions associated with the separation of the polymer from the solvent/dispersant. If the solution/dispersion is laid down in successive steps, a continuous film or coating free from pinholes can be formed without any subsequent heating above ambient temperature by control of the rate of evaporation. This can be done by vapor/liquid equilibrium in a container or an enclosure; therefore, the solvent/dispersant removal step can be merely a drying step or a controlled process for forming a coating or film. If the solvent/dispersant is removed as by flash evaporation, a film will not form without a separate heating step.

After the solvent/dispersant has been removed, the residual polymer, as a separate step, is preferably subjected to a heat source at a temperature of from 250°C to 380°C for a period of time ranging from 10 seconds to 120 minutes, depending upon the thermoplastic properties of the polymers. The polymers having melt viscosities on the order of 5 x $10^5$ poise at about 300°C at a shear rate of 1 sec.$^{-1}$, as measured by a typical capillary rheometer, would require the longer times and higher temperatures within the limits of the chemical group stability. Polymers with viscosities on the order of 1 poise at ambient temperatures would require no further treatment.

The most preferred treatment temperatures are from 270°C to 350°C and a time of from 0.2 to 45 minutes for the most preferred polymers for use in the present invention. Such polymers form continuous films under the conditions described above.

Films of varying thicknesses can be easily produced by the methods and means described above. Such films are suitable as membranes when in their ionic forms for use in electrochemical cells. They are particularly useful for the electrolysis of sodium chloride brine solutions to produce chlorine gas and sodium hydroxide solutions. Membranes prepared according to the present invention have surprisingly good current efficiencies when used in chlor-alkali cells.

EXAMPLES

Example 1

A terpolymer solution was prepared from monomers represented by general formulas I; II, and III set forth hereinafter:

$CF_2=CF\text{-}O\text{-}CF_2\text{-}CF_2\text{-}CF_2\text{-}Cl$; (I)

$CF_2=CF\text{-}O\text{-}CF_2\text{-}CF_2\text{-}CO\text{-}O\text{-}CH_3$, (II)

and

$CF_2=CF_2$ (III)

The terpolymer solution was prepared by the following techniques: 7.0 grams of monomer I and 14 grams of monomer II was added to 400 ml of deoxygenated water containing 3 grams of $K_2S_2O_8$, 1.5 grams of $Na_2HPO_4$ and 3.5 grams of $C_7F_{15}CO_2K$ under a positive pressure of monomer III in a 1 liter glass-lined reactor at a temperature of 25°C and 70 psig (482 kPa) pressure with stirring for 105 minutes. The reactor was then vented and the contents were acidified with 50 ml of concentrated

hydrochloric acid to coagulate the latex. The polymer was vigorously washed to remove residual salts and soap and monomers. Some of the terpolymer was dissolved in 150 milliliters of $BrCF_2CF_2Br$ by stirring 20 grams of the polymer at a reflux temperature of 47.3°C for 2 hours. At least a portion of the polymer dissolved in the solvent. The solution was analyzed by evaporating a portion of the solution and weighing the polymer remaining in the container and found to contain 0.3 weight percent polymer. 50 Milliliters of this solution was poured into a petri dish and the solvent was allowed to evaporate. This yielded a continuous polymer film in the bottom of the dish. This film was hydrolyzed with a 15 percent weight percent KOH in methanol solution for 1 hour at a temperature of 50°C. The polymer thickness was measured and found to be 2 mils (50.8 micron) thick.

Example 2

A copolymer of $CF_2=CF_2$ and $CF_2=CFOCF_2CF_2SO_2F$ having equivalent weight of 1144 was prepared. The polymer was prepared according to the following procedure. 784 grams of $CF_2=CFOCF_2CF_2SO_2F$ was added to 4700 grams of deoxygenated water containing 25 grams $NH_4O_2CC_7F_{15}$, 18.9 grams of $Na_2HPO_4 \bullet 7H_2O$, 15.6 grams of $NaH_2PO_4 \bullet H_2O$ and 4 grams of $(NH_4)_2S_2O_8$ under a positive pressure of 250 psig (1722 kPa) of tetrafluoroethylene at 60°C for 58 minutes. The reactor was vented under heat and vacuum to remove residual monomers. The reactor contents was frozen, thawed, and vigorously washed to remove residual salts and soap. After vacuum drying, a dispersion was prepared by placing 56 grams of polymer prepared above in a laboratory-size single tier 290 revolutions per minute roller Norton Jar Mill with 168 grams of 1,2-dibromotetrafluoroethane. The mixture was mixed in the ball mill overnight at ambient temperature and at atmospheric pressure.

To the resulting soft paste 300 grams of 1,2-dibromotetrafluoroethane was added and the mill was rolled an additional 3 hours. The resulting dispersion was found to contain 12.5 weight percent polymer. The mixture was coated onto a sheet of aluminum foil having a thickness of 38 microns by dipping the foil into the dispersion. The coated aluminum foil was allowed to air dry. Thus, the dispersant evaporated from the dispersion at ambient temperature.

The coated aluminum foil was then heated to a temperature of 300°C in a muffle furnace for 1 minute to sinter the polymer into a more uniform film form.

The resulting film was found to be a continuous film and had a thickness of 0.5 mils (12.7 microns).

The dipping and heating process was repeated 5 times until a 2.5 mil (63.5 microns) thick polymer film was built up.

Two pieces of aluminum foil which had been coated in the above described manner were pressed together, coated side to coated side, under a pressure of 800 psi (5512 kPa) at a temperature of 595°F (313°C) for 4 minutes. The resulting film, with aluminum foil on both sides, was hydrolyzed for 16 hours in a 25 weight percent sodium hydroxide aqueous solution at a temperature of 90°C. This treatment dissolved the aluminum foil and left only the two layer film. The two layer film was tested in a chlor-alkali membrane cell. The cell was operated at a temperature of 89°C at a current density of 2 amps/in$^2$ (0.31 amps/cm$^2$) of electrode surface areas with a 3 millimeter (3000 micron) gap between the anode and cathode. A cathode having an electrocatalyst on its surface was used. The cell voltage was 3.11 volts at about 12.9 weight percent sodium hydroxide concentration being produced in the cathode chamber. The caustic current efficiency was found to be 92.2 percent. The caustic produced in the catholyte chamber was analyzed and found to contain 1030 parts per million sodium1chloride. The total energy consumed for the production of one metric ton of sodium hydroxide was calculated to be 2259 kilowatt hours.

Example 3

A copolymer of $CF_2=CF_2$ and $CF_2=CFOCF_2CF_2CO_2CH_3$ was prepared having an equivalent weight of 847. 50 grams of $CF_2=CFOCF_2CF_2CO_2CH_3$ was added to 300 grams of deoxygenated water containing 3.0 grams of $NH_4O_2CC_7F_{15}$, 1.5 grams of $Na_2HPO_4 \bullet 7H_2O$, 1.0 gram $NaH_2PO_4 \bullet H_2O$, and 0.20 gram $(NH_4)_2S_2O_8$ under a positive pressure of tetrafluoroethylene of 250 psig (1722 kPa) pressure at a temperature of 50°C for 180 minutes in a glass reactor. The reactor was vented and the reactor contents was acidified with 6 normal HCl to coagulate the polymer. The coagulam was filtered out, vigorously washed and vacuum dried.

35 grams of the polymer was ground and mixed overnight in 315 grams of 1,2-dibromotetrafluoroethane in the laboratory jar mill described in Example 1.

The dispersant was analyzed and found to contain 10 weight percent solids. The dispersion was used to coat a sheet of aluminum foil having a thickness of 38 microns by dipping the foil, allowing the coating to air dry and sintering the coating at a temperature of 250°C (482°F) for 1 minute in the muffle furnace described in Example 1.

This coating procedure was repeated until a series of coated foils had been made.in which the coating thickness varied. From 2 to 5 dips on the various films resulted in film thicknesses of the sintered coating of from 0.7 to 1.8 mils (17.8 to 48.6 microns).

The coated foils were then pressed onto an 850 equivalent weight fluorosulfonyl copolymer films which was 4 mils (101.6 microns) thick. The 850 equivalent weight polymer was prepared as the previous fluorosulfonyl copolymer example except for using a pressure of 192 psig (1323 kPa) and a run time of 88 minutes. The dried polymer was extruded at a temperature of 500°F (260°C) to 550°F (288°C) using a Haake Rheomiex 254 1:9 cm vented 25:1 length/diameter 316 stainless steel screw extruder and a 15.24/cm die. With a 20 mil - (508 microns) die gap, the film was drawn down to from 4 to 5 mils (101 to 127 microns) thickness and quenched on an unheated 316 stainless steel roll. The cast film samples were cleaned by degreasing with acetone and air dried. The coated side of the foil was placed against the cast film and the two were placed between two sheets of polytetrafluoroethylene coated glass cloth. These were then placed between two photographic plates. The entire sandwich was compressed at a temperature of 250°C in a hydraulic hot press using about 20 tons force for five minutes.

The combinations were hydrolyzed in a 25 weight percent sodium hydroxide aqueous solution at a temperature of 90°C for 16 hours. This treatment dissolved the aluminum foil from each combination. The resulting two layer films were tested in a chlor-alkali test cell. The cell has an exposed electrode surface of 56 $cm^2$ with a titanium anode compartment and a plexiglass cathode compartment. The anode was a ruthenium oxide coated expanded metal electrode. A cathode having an electrocatalyst as its surface was used. Brine containing 20 weight percent sodium chloride was introduced into the anode compartment and water was added to the cathode compartment as the direct current was passed through the electrodes at 0.3 amps per $cm^2$ of electrode surface area. The membrane was disposed between the electrodes and bolted between the two cell halves with gas exits and overflows from each half.

The data on these films is set forth in Table I following.

TABLE I

| Sample No. | 1 | 2 |
|---|---|---|
| # of Dippings | 2 | 5 |
| Thickness of Coatings-mils (microns) | 0.8 (20) | 1.8 (46) |
| Thickness of Pressed Loading mils (microns) | 0.2 (5.1) | 0.4-0.6 (10.2-15.2) |
| Caustic Current Efficiency (%) | 95.6 | 96.7 |
| Voltage | 3.22 | 3.33 |
| % NaOH | 34.7 | 35.4 |
| Energy (kwh/metric ton NaOH) | 2256 | 2307 |

The caustic current efficiency is determined as the moles of caustic per Faradays of current times 100. That is, the number of moles of caustic which were produced in a test period, divided by the time in seconds times the current over the test period, all divided by 96,520 coulombs per equivalent - (Faraday). The resultant decimal fraction represents the proportion of electrons that produced NaOH. This fraction times 100 gives the caustic current efficiency.

The above data was taken after 13 days of operation and was essentially unchanged after 90 days operation.

Example 4

A copolymer of $CF_2=CF_2$ and $CF_2=CFOCF_2CF_2CO_2CH_3$ was prepared having an equivalent weight of 755. 50 grams of $CF_2=CFOCF_2CF_2CO_2CH_3$ was added to 300 grams of deoxygenated water containing 3.0 grams of $NH_4O_2CC_7F_{15}$, 1.5 grams of $Na_2HPO_4{\bullet}7H_2O$, 1.0 gram $NaH_2PO_4{\bullet}H_2O$, and 0.10 gram $(NH_4)_2S_2O_8$ under a positive pressure of tetrafluoroethylene of 235 psig (1619 kPa) pressure at a temperature of 50°C for 5 hours in a glass reactor. The reactor was vented and the reactor contents was acidified with 6 normal HCl to coagulate the latex. The coagulam was filtered and washed vigorously to remove inorganics and soap. The polymer was vacuum dried for 16 hours at a temperature of 85°C.

15 grams of the polymer prepared above was ground in a lab mortar and pestle with 135 grams of 1,2-dibromotetrafluoroethane to produce a viscous dispersion. The dispersion was used to coat a sheet of aluminum foil which was 38.1 microns thick. The coated foil was pressed in a heated hydraulic press at a pressure of 2000 psi (13,780 kPa) pressure and at a temperature of 540°F - (282°C) for 4 minutes and 20 seconds between glass reinforced polytetrafluoroethylene backing sheets.

The backing sheets were removed from the first polymer film and the coated side of the foil placed against a 5 mil (127 micron) thick film of the second ion exchange polymer film. The pressing operation was repeated using 670 psig (4616 kPa) to attach the first film to the second film. The resulting two-layer film was hydrolyzed in a 25 weight percent sodium hydroxide aqueous solution for 16 hours at a temperature of 90°C. The aluminum foil dissolved in this process. The two-layer film was mounted in a test cell with the 755 equivalent weight polymer facing the cathode compartment.

After 190 days of operation in a chlor-alkali test cell as described in Example 2 to produce chlorine gas and NaOH from the electrolysis of a NaCl brine, produced a 33 weight percent NaOH in an aqueous solution at a 95.6 percent caustic current efficiency and 3.38 volts.

Example 5

A copolymer of $CF_2=CF_2$ and $CF_2=CFOCF_2CF_2SO_2F$ having an equivalent weight of 1160 was prepared according to the following procedure. 50 grams of $CF_2=CFOCF_2CF_2SO_2F$ was added to 300 milliliters of deoxygenated water containing 3 grams $NH_4CO_2C_7F_{15}$, 1.5 grams of $Na_2HPO_4{\bullet}7H_2O$, 1 gram of $NaH_2PO_4{\bullet}H_2O$ and 0.1 grams of $(NH_4)_2S_2O_8$ under a positive pressure of 245 psig (1688 kPa) of tetrafluoroethylene at a temperature of 60°C for 75 minutes in a glass reactor. The reactor was vented under heat and acidified to coagulate the latex. The coagulated polymer was washed repeatedly to remove inorganics and soap. The polymer was vacuum dried for 16 hours at a temperature of 110°C.

30 grams of the fluorosulfonyl copolymer was ground with 270 grams of 1,2-dibromotetrafluoroethane in a lab mortar and pestle until a viscous dispersion was produced.

This dispersion was used to coat a sheet of aluminum foil having a thickness of 38.1 microns. The coating was allowed to air dry. The coated foil was then pressed between glass reinforced polytetrafluoroethylene backing sheets which were held between photographic plates in a heated press. The pressure was 2000 psig (13780 kPa) and the temperature was 595°F (313°C). The time was 4 minutes and 20 seconds. Thereafter, the backing sheet was removed from the press and a thin polymeric film remained on the foil.

A second copolymer was prepared. It was a copolymer of $CF_2=CF_2$ and $CF_2=CFOCF_2CF_2SO_2F$ having an equivalent weight of 974. The polymer was prepared according to the following procedure. 784 grams of $CF_2=CFOCF_2CF_2SO_2F$ was added to 4700 grams of deoxygenated water containing 25 grams $NH_4CO_2C_7F_{15}$, 18.9 grams of $Na_2HPO_4{\bullet}7H_2O$, 15.6 grams of $NaH_2PO_4{\bullet}H_2O$ and 4 grams of $(NH_4)_2S_2O_8$ under a positive pressure of 220 psig (1516 kPa) of tetrafluoroethylene at a temperature of 60°C for 30 minutes. The reactor was vented under heat and vacuum to remove residual monomers. The reactor contents was frozen, thawed, and vigorously washed to remove residual salts and soap. The film was vacuum dried for 16 hours at a temperature of 85°C.

The second film was extruded on a commercially available Killion laboratory extruder with a regular Xaloy barrel and screw. The screw was a standard type commonly used to extrude polyethylene. Blown film was made with a 3.2 cm die with a 20 mil (508 micron) gap heated to a temperature of 550°C using no cooling ring. The extruder was operated at a temperature of from 450°-550°F - (232°C to 288°C) and 20 to 40 revolutions per minute. The hauloff (a mechanical device to roll up the film) operated at 30 to 60 cm/min. Various thicknesses of blown film were produced as desired by varying speeds and the blowing of the bubble.

A 5 mil (127 microns) extruded polymeric film of 84K3023 fluorosulfonyl copolymer was placed against the coated side of the foil and pressed as above except only 670 psig (4613 kPa) pressure was used. This two layer film was hydrolyzed in 25 weight percent sodium hydroxide aqueous solution for 16 hours at a temperature of 90°C. The foil was etched away in this process. The resulting two layer film was placed in a test cell (the same cell described in Example 3) with the 83P019 polymer facing the cathode compartment. After 2 days of operating the following results were obtained.

Cell voltage was found to be 3.02 volts and the caustic current efficiency was 91.5 percent at a caustic concentration of 12.56 weight percent. The sodium chloride concentration in the caustic was analyzed and found to be 940 parts per million. The cell energy was calculated to be 2211 kilowatt hours per metric ton of caustic.

The present invention also resides in a method for sizing polytetrafluoroethylene fabric using the solution/dispersion composition of the invention which, hereinafter, is referred to as a "sizing" composition.

Polytetrafluoroethylene fabrics are fabrics woven from strands of polytetrafluoroethylene. Such fabrics are available in many varieties from a number of distributors, e.g. Stern and Stern Textiles, Incorporated, New York, New York, and identified as T41-30. The fabric is a lenoweave cloth with 45x21 ends/inch and has a thickness of 0.25 cm. It has a weight of 4.35 oz/yd$^2$.

Polytetrafluoroethylene fabrics are used for a variety of purposes including such things as filters, screens, reinforcement, packing, insulation, liners and gasket materials.

They are also used as supports for fluoropolymer ion exchange active films. Such films are commonly used as ion exchange membranes in electrolytic cells.

Fluoropolymer fabrics are limp and exhibit low friction, thread to thread. This causes these fabrics to become distorted under normal handling and causes holes to appear without breaking threads.

The prior art has attempted to coat polytetrafluoroethylene fabrics without success. The present invention provides such a method.

Polytetrafluoroethylene fabrics are limp cloths before sizing.The threads usually tend to slide about during handling and are, thus, very difficult to handle without changing the shape of the fabric. The present invention provides a method for sizing polytetrafluoroethylene fabrics.

Polytetrafluoroethylene fabrics suitable for use in the present invention are those commercially available from a variety of producers. The denier of the fabric is not critical to the successful operation of the present process. Likewise, the overall physical dimensions of the fabrics are not critical.

Polytetrafluoroethylene fabrics are treated with the solution or dispersion composition of the invention which may also be referred to hereinafter as a "sizing" composition.

The following methods are suitable for fixing the sizing composition of the present invention to a polytetrafluoroethylene fabric. Dipping the fabric into the sizing composition, followed by air drying and sintering at the desired temperature with sufficient repetition to build the desired thickness. Spraying the sizing composition onto the fabric is used to advantage for covering large or irregular shapes. Pouring the sizing composition onto the fabric is sometimes used. Painting the sizing composition with brush or roller has been successfully employed. In addition, coatings may be easily applied with metering bars, knives or rods. Usually, the coatings or films are built up to the thickness desired by repetitive drying and sintering.

The fabric upon which the sizing composition is to be deposited is cleaned or treated in such a way as to assure uniform contact with the sizing composition. The fabric can be cleansed by washing with a degreaser or similar solution followed by drying to remove any dust or oils from the fabric.

After being cleaned, the fabric may be preconditioned by heating or vacuum drying prior to contact with the sizing composition and the coating operation. Temperatures and pressures in the following ranges are preferably used: 20 mm Hg at a temperature of 110°C is sufficient in all cases; however, a mild heat treatment is usually adequate, i.e., on the order of about 50°C at atmospheric pressure.

After preparation, the fabric is coated with the sizing composition by any one of the several means mentioned hereinbefore and is applied in a single step or in several steps depending on the concentration of the polymer in the sizing composition and the desired thickness of the coating.

Following the application of the sizing composition, the solvent/dispersant is removed by any one of the several methods mentioned hereinbefore.

A use for the present invention is the preparation of impregnated or polymer-permeated reinforcement media which may be used to support a membrane in the form of a film or sheet. Reinforcement scrims or cloths may be prepared by dipping, painting or spraying the sizing composition onto the scrim or cloth. The coated scrim or cloth is then baked or sintered to fix the fluoropolymer impregnation to the scrim or cloth. The impregnated scrim or cloth is easier to handle than an untreated scrim or cloth.

Example 6

A copolymer of $CF_2=CF_2$ and $CF_2=CFOCF_2CF_2SO_2F$ having an equivalent weight of 850 was prepared according to the following procedure. 784 grams of $CF_2=CFOCF_2CF_2SO_2F$ was added to 4700 grams of deoxygenated water containing 25 grams $NH_4O_2CC_7F_{15}$, 18.9 grams of $Na_2HPO_4 \bullet 7H_2O$, 15.6 grams of $NaH_2PO_4 \bullet H_2O$ and 4 grams of $(NH_4)_2S_2O_8$ under a positive pressure of 192 psig (1323 kPa) of tetrafluoroethylene at a temperature of 60°C for 88 minutes. The reactor was vented under heat and vacuum to remove residual monomers. The reactor contents was frozen, thawed, and vigorously washed to remove residual salts and soap. After vacuum drying, a sizing solution was prepared by placing 35 grams of polymer prepared above in a laboratory-size single tier 290 revolutions per minute roller Norton Jar Mill with 315 grams of 1,2-dibromotetrafluoroethane. The mixture was mixed in the ball mill overnight at ambient temperature and at atmospheric pressure. The dispersant was analyzed and found to contain 10 weight percent solids.

To the resulting soft paste 300 grams of 1,2-dibromotetrafluoroethane was added and the mill was rolled an additional 3 hours. The resulting dispersion was found to contain 10 weight percent polymer.

A circle of Prodesco polytetrafluoroethylene cloth 24X24 leno weave about 15 cm in diameter was cut from a supply of polytetrafluoroethylene cloth. It was clamped into a hoop. The hoop and cloth was dippened into the sizing composition prepared above. The hoop and cloth was removed from the sizing composition and the excess sizing composition was shaken off. After being allowed to air dry, the coated cloth was placed in a muffle furnace and kept at a temperature of 225°C for 1 minute.

The sized polytetrafluoroethylene cloth had been well permeated with the sizing composition and had a good "hand" (as used in textile terminology), compared to the limp cloth before the sizing treatment. The threads, which usually tend to slide about during handling, were effectively held in place and the polytetrafluoroethylene cloth was easily removed from the hoop.

The present invention also provides for a method of supporting an ion exchange active membrane using the polytetrafluoroethylene fabric employed in the preceding Example 6.

Currently, it is difficult to attach polytetrafluoroethylene fabrics to ion exchange active membranes in the shape of films or sheets. In fact, as currently practiced, the fabric is only embedded within the membrane and not attached or bonded thereto. Internal voids are left within the threads and at the intersections of the weave.

The present invention includes within its scope an ion exchange membrane supported by a polytetrafluoroethylene fabric where the fabric is more intimately attached or bonded and thus forms a more integral part of the structure.

According to this procedure of the invention, a polytetrafluoroethylene fabric is treated with the solution or dispersion composition of the invention, i.e. sizing composition to coat the fabric which may then be bonded to an ion exchange membrane in accordance with the procedure set forth in the following example. The same polymers may be used for both, or the polymers may be different.

Example 7

A copolymer of $CF_2=CF_2$ and $CF_2=CFOCF_2CF_2SO_2F$ having equivalent weight of 850 was prepared in accordance with the same procedure as set forth in Example 6.

The sized polytetrafluoroethylene cloth prepared by the same procedure as in Example 6, was found to have a good "hand" (as used in textile terminology), compared to the limp cloth before the sizing treatment.

The sized polytetrafluoroethylene cloth was placed on an ion exchange membrane in the form of a film of a carboxylic vinyl ether ester copolymer with tetrafluoroethylene which had been coated onto a 1.5 mil (38.1 microns) thick aluminum foil. The cloth was backed by a sheet of silicone rubber. The sheets were placed between photographic plates and polytetrafluoroethylene coated glass cloth and pressed in a hydraulic hot press at a temperature of 250°C at 5 tons force for 5 minutes.

The membrane with attached polytetrafluoroethylene fabric was placed in a 25 weight percent aqueous sodium hydroxide solution at room temperature to remove the aluminum foil. The membrane was inspected with an optical microscope and found to have excellent bonding and adhesion of the polytetrafluoroethylene fabric to the membrane with no detectable holes.

Example 8

A carboxylic ester vinyl ether copolymer with tetrafluoroethylene having an equivalent weight of 847 was made into a 10 weight percent dispersion in $BrCF_2CF_2Br$. This dispersion was used to coat an aluminum foil. The foil was then pressed at 2 tons pressure at a temperature of 250°C for 5 minutes. The coated side of the foil was then pressed onto a 10 cm by 10 cm piece of 4 mil (0.1 mm) thick fluorosulfonyl vinyl ether copolymer of 830 equivalent weight at the same pressing conditions. The fluorosulfonyl side was turned up and polytetrafluoroethylene fabric which had been sized with a fluorosulfonyl dispersion of 850 equivalent weight polymer (10 weight percent in $BrCF_2CF_2Br$) was placed on the film. The polytetrafluoroethylene was backed with a silicone rubber sheet and these were placed between polytetrafluoroethylene covered glass cloth sheets and photographic plates. The entire assembly was pressed for 35 minutes at a temperature of 250°C at 2 tons force. The heating was discontinued and the reinforced membrane was removed from the press when the temperature had reached 200°C. The membrane was then placed in a solution of 25 weight percent aqueous sodium hydroxide at room temperature to remove the aluminum foil.

Example 9

A piece of aluminum foil was coated with an 856 equivalent weight carboxylic ester copolymer. The carboxylic ester copolymer was then coated with an 850 equivalent weight fluorosulfonyl copolymer. The coated foil was placed polymer side down on top of a sized polytetrafluoroethylene fabric (Prodesco Inc. 12 x 12 leno weave cloth) which was in turn placed on a vacuum table. The vacuum was applied and the table was placed under a heated platen for about 4 minutes at about 250°C. The polytetrafluoroethylene fabric was firmly bonded to the support layer polymer.

The invention further includes a method for forming a polymer film on a removable substrate and particularly for forming an ion exchange active membrane on a removable substrate.

Following the procedure hereinbefore employed for the manufacture of the solution/dispersion composition and after the solvent dispersant has been removed, a variety of means can be employed to remove the substrate including, chemically etching the substrate, peeling the substrate from the film, peeling the film from the substrate, and other physical or chemical means.

The invention also resides in a method for forming polymer films having a bubble release surface and particularly.for forming an ion exchange active membrane having a bubble release surface employing the solution/dispersion composition of the invention.

It has been found that ion exchange membranes frequently operate more efficiently if their surface is roughened. This is especially true when such membranes are used in processes where a gas is generated adjacent to the membrane. A roughened membrane releases the gas from its surface which does not result in gas blinding of the membrane. However, the preparation of such a roughened membrane surface is difficult and the present invention provides a simple method for producing such a roughened membrane surface.

The present invention may particularly be employed to form superior solid polymer electrolyte membranes or fuel cell membranes with enhanced bonding and transport to the conductive and catalytic layers, i.e. the replicated surface of the film having fine orders of roughness allowing better adhesion to the catalyst and conductive particles. This allows more intimate contact than the smooth surface produced by ordinary fabrication techniques.

Various types of roughened membranes are described, for example, in U.S. Patent Nos. 4,323,434; 4,468,301; and 4,349,422. Surface roughness can be formed by almost any surface treating technique including air blasting with alumina, sand, zirconium oxide, or the like; belt sanders; oscillating wire brush; chemical etching or other well-known techniques.

A roughening process for a substrate is carried out by either spraying a surface or chemically etching a surface to the desired degree of roughness. The roughness of the polymer film - (membrane surface) is then determined by the conformation of the polymer to the roughened surface of the substrate.

The roughening process may include the procedure of embedding particles into the roughened substrate. These particles may be left in the substrate and, when later used to form polymer films, may become part of the film. This provides a simple means for forming membranes having bubble release particles in their surface.

This can be carried out by the following procedure: A roughened surface is prepared; the solution or dispersion composition of the invention is applied to the roughened surface; and the solvent/dispersant is removed leaving a polymer film conforming to the roughened surface. If desired, the polymer film and substrate can be further treated by fusing, sintering or pressing to aid in the forming process. The film is then separated from the substrate by well-known physical or chemical techniques.

The type of substrate upon which the solution/dispersion composition of the present invention may be applied can be any roughenable surface including such things as sheets made of a metal such as e.g. aluminum, glass, wood, or other polymers.

The substrate upon which the dispersion is to be deposited may optionally be cleaned or treated in the aforementioned manner to assure uniform contact with solution/dispersion composition.

A variety of techniques can be used to separate the film from the substrate after formation of a continuous film on the substrate, including chemically etching the substrate away, vaporizing the substrate, dissolving the substrate, peeling the substrate from the film, peeling the film from the substrate, and the like.

Films of varying thicknesses can be easily produced by the method of the invention.

Example 10

A sheet of aluminum foil 2 mils (0.05 mm) thick soft drawn is etched with 300 grit alumina to impart an irregular, sharply featured surface to the aluminum foil. This left some of the particulates embedded in the foil.

A viscous dispersion was prepared in accordance with the procedure set forth in Example 4 was used to coat the sheet of aluminum foil prepared above.

The coating was fused for five minutes at a temperature of 250°C and the coating procedure was repeated a sufficient number of times to accumulate an 0.8 mils (0.02 mm) thick coating on the foil.

The coated side of the foil was placed against a 4 mil (0.1 mm) thick film of an 850 equivalent weight polymer prepared in accordance with the procedure set forth in Example 6.

The dried polymer was then extruded at a temperature of from 260°C to 288°C using a Haake Rheomex 254 stainless steel screw extruder and a 15 cm die. With a 20 mil (0.5 mm) die gap, the film was drawn down to 4-5 mils (0.1 to 0.13 mm) thickness and quenched on an unheated stainless steel roll. The case film samples were cleaned by degreasing with acetone and air dried.

The so-prepared coated aluminum foil and the film were placed between two sheets of polytetrafluoroethylene covered glass cloth and this, in turn, was placed between two photographic plates. The composite sandwich was pressed for 5 minutes at a pressure of 800 psi (5512 kPa) and at a temperature of 250°C on a hydraulic hot press. The composite film and foil was then removed from the press and placed in a 25 weight percent aqueous sodium hydroxide bath at a temperature of 70°C for 4 hours to remove the foil and hydrolyze the film. The membrane film was now in the sodium form and suitable for use in a minimum brine gap chlor-alkali cell.

Inspection of the surface with an optical microscope showed a finely detailed roughness with sharp points and some grit particles adhering to the points where it was left after the foil was eaten away.

A chlor-alkali test cell was constructed to test the so-formed ion exchange membrane. The cell had an exposed electrode surface of about 56 $cm^2$ with a titanium anode compartment and a plexiglass cathode compartment. The anode was a ruthenium oxide coated expanded metal electrode. A cathode having an electocatalyst on its surface was used. Brine containing 20 weight percent sodium chloride was introduced into the anode compartment and water was added to the cathode compartment as the direct current was passed through the electrodes at 0.3 amps/$cm^2$ of electrode surface area. The membrane was disposed between the electrodes and bolted between the two cell halves with gas exits and overflows from each half. The membrane performed well in the chlor-alkali test cell.

The invention further resides in a method for forming composite polymer films and particularly for forming ion exhange active membranes.

Although the polymers of each layer can have the same or different radicals for Y, the most preferred composite polymer is one where the polymer of one layer has Y as $-SO_2F$ and the polymer of the other layer has Y as $-COOCH_3$.

The term composite film herein refers to a film composed of two or more different polymers. These polymers may differ by type or concentration of sites convertible to ion exchange group. These different polymers are disposed in layers parallel to the film surface. The second polymer film may contain ion exchange sites or sites convertible to ion exchange sites. However, the polymer used to form the solvent/dispersant composition of the invention should not contain ion exchange sites, but should contain sites convertible to ion exchange sites.

After a first polymer solvent/dispersion composition of the invention has been formed, it may be fixed to another polymer film by sintering or compression.

The following method is particularly suitable for fixing the composition of the present invention to a second polymer film. Dipping a second polymer film into the composition, followed by air drying and sintering at the desired temperature with sufficient repetition to build the desired thickness. Spraying the composition onto a second polymer film is used to advantage for covering large or irregular shapes. Pouring the composition onto a second polymer film is sometimes used. Painting the composition with brush or roller has been successfully employed. In addition, coatings may be easily applied with metering bars, knives, or rods. Usually, the coatings or films are built up to the thickness desired by repetitive drying and sintering.

The second polymer film upon which the composition is to be deposited may be cleaned or treated in such a way as to assure uniform contact with the composition. The second polymer film can be cleansed by washing with a degreaser or similar solvent followed by drying to remove any dust or oils from second polymer film.

After being cleaned, the second polymer film may be pre-conditioned by heating or vacuum drying prior to contact with the composition in the coating operation.

After preparation, the second polymer film is coated with the composition and the solvent/dispersant is removed in accordance with the aforedescribed procedures.

Composite films of varying layer thicknesses can be easily produced by the method of the invention. Such films are particularly suitable as membranes, when in their ionic forms, for use in electrochemical cells for the electrolysis of sodium chloride brine solutions to produce chlorine gas and sodium hydroxide solutions. Membranes prepared according to the present invention have surprisingly good current efficiencies when used in such chlor-alkali cells.

Example 11

The film of Example 4, having an equivalent weight of 974, was prepared.

A dispersion composition of an 856 equivalent weight carboxylic ester polymer was made by mixing 49 grams of the polymer with 307 grams of 1,2-dibromotetrafluoroethylene. This composition was used to coat the above-prepared film by dipping the film into the composition. The coated film was pressed for 5 minutes in a hot press at a pressure of 2756 kPa and at a temperature of 250°C between glass fiber reinforced polytetrafluoroethylene backing sheets which were, in turn, positioned between photographic plates.

The backing sheets were removed and the composite film was hydrolyzed in a 25 weight percent aqueous sodium hydroxide solution for 4 hours.

This composite membrane was run in a chlor-alkali cell with the carboxylic polymer facing the cathode of the cell and performed extremely well.

According to a further embodiment of the invention, the compositions of the invention can be employed to form polymer composite films using a removable substrate.

After a polymer from a dispersion composition has been fixed to a substrate, it is contacted with a second dispersion composition formed in the same manner as the first dispersion composition. Thereafter, the second dispersion is fused to form a second film and to bond the second film to the first film. After the second film is formed, the two films are fused together by heating the two films under pressure to bond the polymers in the two films together. The bonding temperature is from 150°C to 380°C. The pressure is suitably up to about 2000 psi (13780 kPa). The time is from 10 seconds to 120 minutes.

The removable substrate can be removed by a variety of techniques as hereinbefore described.

Composite films of varying thicknesses can thus be easily produced by the method and means described hereinabove.

The final heating and bonding steps can be alternately accomplished in one coordinated operation, rather than separately. That is, the second film may be formed and fused at the same time it is being fused to the first film.

Example 12

A copolymer of $CF_2=CF_2$ and $CF_2=CFOCF_2CF_2COOCH_3$ was prepared as followed:

50 grams of $CF_2=CFOCF_2CF_2COOCH_3$ was added to 250 grams of deoxygenated water containing 3 grams of $NH_4O_2CC_7F_{15}$, 1.5 grams of $Na_2HPO_4{\bullet}7H_2O$ and 1.0 gram of $NaH_2PO_4{^\wedge}H_2O$ in a glass reactor with stirring at 800 rpm. Next, 50 ml of deoxygenated water containing 0.05 $(NH_4)_2S_2O_8$ was injected into the reactor and the reactor was kept under a positive pressure of 220 psig (1516 kPa) tetrafluoroethylene at a temperature of 50°C for 180 minutes. The reactor was vented and the contents was acidified with 50 ml 6N HCl to coagulate the latex and cause the polymer to separate from the emulsion. The polymer was filtered, vigorously washed to remove inorganics, soap and residual monomers and then vacuum dried for 16 hours at a temperature of 85°C. The dried polymer weighed 99.2 grams and upon titration was found to have an equivalent weight of 856.

A dispersion of the 856 equivalent weight carboxylic ester polymer was made by mixing about 49 grams of the polymer with about 304 grams of 1,2-dibromotetrafluoroethane.

A polymer was prepared in accordance with the procedure of Example 6. The polymer had an equivalent weight of 850.

30 grams of the polymer was made into a second dispersion using 270 grams of 1,2-dibromotetrafluoroethane. The dispersion was coated onto an aluminum foil and heated to a temperature of 300°C for 1 minute. The coating and heating steps were repeated until a coating of 4 mils - (0.1 mm) was obtained.

A piece of aluminum foil was coated with the 856 equivalent weight carboxylic ester copolymer dispersion. The dispersant was allowed to air dry and the coated foil was fused for 1 minute at a temperature of 250°C between polytetrafluoroethylene coated glass cloth sheets. The process was repeated to build a 1 mil thick (0.025 mm) film. The carboxylic ester copolymer film on the foil was then coated in a like manner with an 850 equivalent weight fluorosulfonyl copolymer dispersion to build a fluorosulfonyl copolymer film until the total film thickness of the two combined films was 5 mils (0.13 mm). The coated foil was placed polymer side down on top of a sized polytetrafluoroethyl-ene fabric (Prodesco Inc. 12 x 12 leno weave cloth) which was in turn placed on a vacuum table. The vacuum was applied and the table was placed under a heated platen for 4 minutes at a temperature of 250°C. The polytetrafluoroethylene fabric was firmly bonded to the support layer polymer.

According to a further aspect of the invention, it is possible to employ the composition of the invention in the following manner. After coating a first dispersion composition onto a first substrate and coating a second dispersion composition onto a second substrate, it is possible to contact the dispersions compositions and form them into a fused composite film while maintaining them in contact. The two compositions, when processed in this manner, will tend to mingle to some extent.

After two polymers have been applied to their respective substrate, they are contacted with each other at a temperature, at a pressure and for a time sufficient to bond the two polymers together. Such temperatures are usually from 150°C to 380°C. The pressure is suitably up to 2000 psi (13,780 kPa), and the time is from 10 seconds to 120 minutes.

Thereafter, the substrates are removed by a variety of means as hereinbefore described.

Composite films of varying layer thicknesses can thus be easily produced by the method and means described hereinabove.

Example 13

A first polymer having an equivalent weight of 850 was prepared in accordance with the procedure set forth in Example 6.

30 grams of the first polymer was made into a dispersion using 270 grams of 1,2-dibromotetrafluoroethane. The dispersion was coated onto an aluminum foil and heated to a temperature of 300°C for 1 minute. The coating and heating steps were repeated until a coating of 4 mils - (0.1 mm) was achieved.

A second copolymer was then prepared in accordance with the procedure set forth in Example 2. It was a copolymer of $CF_2=CF_2$ and $CF_2=CFOCF_2CF_2SO_2F$ having an equivalent weight of 1144. After vacuum drying of the polymer, a second dispersion was prepared by placing 56 grams of the polymer in a Norton Jar Mill with 168 grams of 1,2-dibromotetrafluoroethane. The mixture was mixed in the ball mill overnight at ambient temperature and at atmospheric pressure.

To the resulting soft paste 300 grams of 1,2-dibromotetrafluoroethane was added and the mill was rolled an additional 3 hours. The resulting dispersion was found to contain 12.5 weight percent polymer. The mixture was coated onto a sheet of aluminum foil approximately 38 microns thick by

dipping the foil which had been formed into an envelope or pocket shape into the dispersion. The coated aluminum foil was allowed to air dry. Thus, the dispersant evaporated from the dispersion at ambient temperature.

The aluminum foil coated with the second copolymer was heated at to a temperature of 300°C in a muffle furnace for 1 minute to fuse the polymer into a more uniform film form.

The resulting film was found to be a continuous film and had a thickness of 0.5 mils (12.7 microns).

The dipping and heating process was repeated 5 times until a 2.5 mil (0.0635 mm) thick second polymer film was built up.

The two coated foils above were then pressed together, coated side to coated side, at a temperature of 300°C and at a pressure of 400 psig (2756 kPa) for 3 minutes. The resulting two layer composite membrane was hydrolyzed in a 25 weight percent aqueous sodium hydroxide solution. It was then run satisfactorily in a chlor-alkali test cell.

## Claims

1. A solution/dispersion composition comprising a perfluorinated polymer containing sites convertible to ion exchange groups dissolved in a solvent/dispersant having:

a boiling point less than 110°C; and

a solubility parameter of from greater than 7.1 up to 8.2 hildebrands.

2.The composition of Claim 1 wherein the perfluorinated polymer is a copolymer comprising a first monomer represented by the general formula:

$CF_2=CZZ'$ (I)

where:

Z and Z' are independently selected from -H, -Cl, -F, or $CF_3$; and

a second monomer represented by the general formula:

$Y-(CF_2)_a-(CFR_f)_b-(CFR_{f'})_c-O-[CF(CF_2X)-CF_2-O]_n-CF=CF_2$ (II)

where:

Y is selected from $-SO_2Z$, -CN, -COZ, and $C(R^3_f)(R^4_f)OH$;

Z is I, Br, Cl, F, OR, or $NR_1R_2$;

R is a branched or linear alkyl radical having from 1 to 10 carbon atoms or an aryl radical;

$R^3_f$ and $R^4_f$ are independently selected from perfluoroalkyl radicals having from 1 to 10 carbon atoms;

$R_1$ and $R_2$ are independently seleoted from H, a branched or linear alkyl radical having from 1 to 10 carbon atoms or an aryl radical;

a is 0-6;

b is 0-6;

c is 0 or 1;

provided a+b+c is not equal to 0;

X is Cl, Br, F, or mixtures thereof when n>1;

n is 0 to 6; and

$R_f$ and $R_{f'}$ are independently selected from F, Cl, perfluoroalkyl radicals having from 1 to 10 carbon atoms and fluorochloroalkyl radicals having from 1 to 10 carbon atoms.

3. The composition of Claim 2 wherein the perfluorinated polymer includes a third monomer represented by the general formula:

$Y'-(CF_2)_{a'}-(CFR_f)_{b'}-(CFR'_f)_{c'}-O-[CF(CF_2X')-CF_2-O]_{n'}-CF=CF_2$ (III)

where:

Y' is F, Cl or Br;

a' and b' are independently 0-3;

c' is 0 or 1;

provided a'+b'+c' is not equal to 0;

n' is 0-6;

$R_f$ and $R'_f$ are independently selected from Br, Cl, F, perfluoroalkyl radicals having from 1 to 10 carbon atoms, and chloroperfluoroalkyl radicals having from 1 to 10 carbon atoms; and

X' is F, Cl, Br, or mixtures thereof when n'>1.

4. The composition of Claim 1, 2 or 3 wherein the boiling point of the solvent/dispersant is from 30°C to 110°C.

5. The composition of any one of the preceding claims wherein the solubility parameter of the solvent/dispersant is from greater than 7.1 up to 7.5 hildebrands.

6. The composition of any one of the preceding claims wherein the polymer is dissolved in the solvent at a concentration of less than about 0.5 weight percent.

7. The composition of Claim 6 wherein the polymer is dissolved in the solvent at a concentration of from 0.1 to 0.3 weight percent.

8. The composition of any one of Claims 1 to 5 wherein the polymer is present in the dispersion at a concentration of from 0.1 to 50 weight percent.

9. The composition of Claim 8 wherein the polymer is present in the dispersion at a concentration of from 5 to 15 weight percent.

10. The composition of Claim 8 or 9 wherein the density of the dispersant is from 1.55 to 2.97 $g/cm^3$.

11. The composition of Claim 8 or 9 wherein the density of the dispersant and the density of the polymer are both from 1.55 to 2.2 $g/cm^3$.

12. The composition of any one of the preceding claims, wherein said solvent/dispersant has the general formula:

$XCF_2$-CYZX'

wherein:

X is selected from F, Cl, Br, and I;

X' is selected from Cl, Br, and I;

Y and Z are independently selected from H, F, Cl, Br, I and R';

R' is selected from perfluoroalkyl radicals and chloroperfluoroalkyl radicals having from 1 to 6 carbon atoms.

13. The composition of Claim 12 wherein X and X' are Cl or Br.

14. A method for sizing polytetrafluoroethylene fabrics comprising the steps of:

contacting the composition of any one of the preceding claims with the fibers of a polytetrafluoroethylene fabric; and

removing the solvent/dispersant from the composition.

15. A method for supporting an ion exchange active membrane comprising the steps of:

at least partially coating a polytetrafluoroethylene fabric with the composition of any one of the preceding claims;

contacting the coated fabric with a membrane having sites convertible to ion exchange groups; and

removing the solvent/dispersant by heating the fabric and the membrane while maintaining the fabric and the membrane in contact with each other.

16. The method of Claim 15 wherein the polytetrafluoroethylene fabric and the ion exchange active membrane film are heated to a temperature of from 50 to 320°C.

17. The method of Claim 15 or 16, wherein the polytetrafluoroethylene fabric and the ion exchange active membrane film are heated under a pressure of up to 13,780 kPa (2000 $lb/in^2$).

18. A method for forming polymer films using a removable substrate comprising the steps of:

depositing the composition of any one of Claims 1 to 13 onto the removable substrate;

removing the solvent/dispersant from the composition; and

removing the substrate.

19. The method for Claim 18 wherein the substrate is removed by dissolving the substrate with a solvent.

20. The method of Claim 18 wherein the substrate is removed by an alkaline solution.

21. The method of Claim 18 including the step of heating the coated substrate to fuse the polymer into a film prior to removing the substrate.

22. A method for forming polymer films having a roughened surface using removable substrates, comprising the steps of:

providing a removable substrate with a roughened surface;

depositing the solution/dispersion composition of any one of Claims 1 to 13 onto the roughened substrate;

removing the solvent/dispersant from the composition; and

removing the substrate.

23. The method of Claim 22 wherein the substrate is a metal and removing the substrate by dissolving the substrate with a solvent or an alkaline solution.

24. The method of Claim 22 wherein the substrate is roughened by blasting with a particulate material or by chemical etching.

25. A method for forming composite polymer films comprising the steps of:

depositing the solution/dispersion composition of any one of Claims 1 to 13 onto a polymer film containing ion exchange groups or sites convertible to ion exchange groups to form a second film on the polymer film; and

heating the two films to fuse the two films to each other.

26. The method of Claim 25 wherein the polymer film is an ion exchange film in its acid or salt form.

27. A method for forming polymer composite films using a removable substrate comprising the steps of:

depositing the dispersion composition of any one of Claims 1 to 13 onto a removable substrate;

heating the composition to form and fuse a first polymer film on the substrate;

depositing a second dispersion composition of any one of Claims 1 to 13 onto the first film;

heating the composition to form and fuse a second polymer film;

bonding the first film to the second film; thereby forming a composite film; and

removing the substrate.

28. The method of Claim 27 wherein the removable substrate is a metal, and removing the substrate by dissolving the substrate with a solvent or an alkaline solution.

29. The method of Claim 27 including the step of heating the coated substrate to a temperature of up to 300°C to fuse the first film to the second film.

30. A method for forming polymer composite films using removable substrates comprising the steps of:

depositing the dispersion composition of any one of Claims 1 to 13 onto a first removable substrate;

removing the dispersant from the first composition, thereby forming a first film;

depositing the dispersion composition of any one of Claims 1 to 13 onto a second removable substrate;

removing the dispersant from the second composition, thereby forming a second film;

bonding the first film to the second film;

and

removing the first and the second substrate.

31. The method of Claim 30 wherein the first and the second polymers are present in the first and the second dispersion compositions at a concentration of from 0.3 to 30 weight percent.

32. The method of Claim 30 or 31 wherein the first and second removable substrates are made of a metal, wherein the first and second substrates are independently removed by dissolving the substrates with a solvent or an alkaline solution.

33. The method of Claim 30 or 31 including the step of heating the coated first and second substrates to fuse the first and second polymers into films prior to removing the substrate.